# EUROPÄISCHE PATENTSCHRIFT

(11) **EP 1 968 150 B1**
(45) Veröffentlichungstag und Bekanntmachung des Hinweises auf die Patenterteilung: **21.07.2010**
(21) Anmeldenummer: 08150937.4
(22) Anmeldetag: 01.02.2008
(51) Int. Cl.: H01M 8/24, H01M 8/04

(54) **Brennstoffzellensystem**
Fuel cell system
Système de piles à combustibles

(30) Priorität: 13.02.2007 DE 102007007605
(43) Veröffentlichungstag der Anmeldung: 10.09.2008
(73) Patentinhaber: J. Eberspächer GmbH & Co. KG, 73730 Esslingen (DE)
(72) Erfinder: Kaupert, Andreas, 73730 Esslingen (DE)
(74) Vertreter: BRP Renaud & Partner

(56) Entgegenhaltungen:
- EP-A- 0 780 917
- EP-A- 0 814 526
- WO-A-02/41425
- WO-A-99/17390
- WO-A-2008/006328
- DE-A1- 4 446 841
- DE-A1- 19 948 214
- DE-C1- 19 910 695
- US-A- 5 763 114

## Beschreibung

Die vorliegende Erfindung betrifft ein Brennstoffzellensystem, insbesondere in einem Kraftfahrzeug, mit den Merkmalen des Oberbegriffs des Anspruchs 1.

Aus der EP 1 624 516 A1 ist ein Brennstoffzellensystem bekannt, das eine Brennstoffzelle zum Generieren von elektrischem Strom aus Brenngas und Oxidatorgas, nämlich Luft, sowie eine Oxidatorversorgungseinrichtung zum Zuführen von Oxidatorgas zur Brennstoffzelle aufweist. Dabei ist die Brennstoffzelle in einem Einbauraum angeordnet, aus dem die Oxidatorversorgungseinrichtung das Oxidatorgas ansaugt. Durch diese Bauweise kann die Bildung eines explosiven Gemisches im Einbauraum beziehungsweise in der jeweiligen Umgebung des Brennstoffzellensystems reduziert werden, das dadurch entstehen kann, dass Brenngas durch Leckagen in die Umgebung des Brennstoffzellensystems beziehungsweise in den Einbauraum austritt.

Aus der EP 0 780 917 A ist ein Brennstoffzellensystem mit Brennstoffzellenstapel, Reformer und Nachbrenner bekannt, die in einem Isolationsgehäuse untergebracht sind. Eine Dichthülle in Form einer äußeren Ummantelung umschließt das Isolationsgehäuse. Ferner ist eine Oxidatorversorgungseinrichtung vorgesehen, die Luft außerhalb der Dichthülle aus einem Zwischenraum zwischen Isolationshülle und Dichthülle ansaugt und so Reformer, Brennstoffzelle und Nachbrenner mit Oxidatorgas versorgt. Ferner findet zwischen einem Nachverbrennungsraum und der zugeführten Luft ein Wärmeaustausch statt.

Weitere Brennstoffzellensysteme sind aus der EP 0 814 526 A, aus der WO 02/41425 A, aus der DE 44 46 841 A, aus der WO 2008/006328 A, aus der WO 99/17390 A, aus der DE 199 48 241 A, aus der DE 199 10 690 C1, aus der US 5,763,114 A und aus der EP 1 670 757 bekannt.

Die vorliegende Erfindung beschäftigt sich mit dem Problem, für ein Brennstoffzellensystem der eingangs genannten Art eine verbesserte Ausführungsform anzugeben, die sich insbesondere durch einen erhöhten Wirkungsgrad auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine thermisch isolierende Isolationshülle vorzusehen, deren Inneres oder Innenraum den Einbauraum bildet. Durch das Vorsehen einer derartigen, zumindest die Brennstoffzelle umschließenden oder umhüllenden Isolationshülle wird der Einbauraum gebildet, der somit durch die Isolationshülle nach außen thermisch isoliert ist. Durch die Verwendung einer solchen Isolationshülle lassen sich Wärmeverluste, beispielsweise durch Konvektionswärme und Strahlungswärme, reduzieren, da die Wärme durch die Isolationshülle quasi im Brennstoffzellensystem verbleibt. Hierdurch wird der Wirkungsgrad des Brennstoffzellensystems erhöht.

Erfindungsgemäß umfasst das Brennstoffzellensystem einen Rezirkulationswärmeübertrager zur Wärmeübertragung zwischen Anodenabgas und einem Oxidatorstrom, wobei das Anodenabgas einem zum Generieren des Brenngases aus Kraftstoff und Oxidatorgas im Einbauraum angeordneten Reformer rückgeführt ist, während der Oxidatorstrom dem Reformer zugeführt ist. Hierdurch können die dem Reformer zugeführten Eduktströme hinsichtlich ihrer Temperaturen angeglichen werden, was letztlich den Wirkungsgrad des Reformers und somit des damit ausgestatteten Brennstoffzellensystems verbessert.

Bei einer ersten erfindungsgemäßen Lösung ist die Oxidatorversorgungseinrichtung eingangsseitig an den Einbauraum, also an das Innere der Isolationshülle angeschlossen, so dass die Oxidatorversorgungseinrichtung das Oxidatorgas aus dem Inneren der Isolationshülle ansaugt. Es ist klar, dass die Isolationshülle zumindest eine geeignete Einlassöffnung aufweist, durch die Oxidatorgas, vorzugsweise Luft, aus der Umgebung der Isolationshülle in den Einbauraum nachströmen kann. Durch diese Bauweise wird die Gefahr reduziert, dass im Einbauraum aufgrund von Leckagen ein explosionsfähiges Gemisch entsteht.

Bei einer zweiten erfindungsgemäßen Lösung wird zusätzlich zur Isolationshülle eine Dichthülle vorgesehen, welche die Isolationshülle umschließt beziehungsweise umhüllt und zwar so, dass zwischen der Isolationshülle und der Dichthülle ein Zwischenraum entsteht. Die Oxidatorversorgungseinrichtung ist bei dieser Lösung eingangsseitig an den Zwischenraum angeschlossen, so dass die Oxidatorversorgungseinrichtung das Oxidatorgas aus dem Zwischenraum ansaugt. Es ist klar, dass die Dichthülle zumindest eine Einlassöffnung aufweist, durch die das Oxidatorgas aus der Umgebung der Dichthülle in den Zwischenraum einströmen kann. Durch diese Bauweise wird erreicht, dass die im Inneren der Isolationshülle, also im Einbauraum enthaltende Wärme nicht durch die Absaugung des Oxidatorgases aus dem Einbauraum abgeführt wird. Die Wärme bleibt bei einer Ausführungsform gemäß der ersten Lösung zwar grundsätzlich innerhalb des Brennstoffzellensystems, kann jedoch gleichzeitig zu einer externen Kühlung der im Einbauraum angeordneten Komponenten des Brennstoffzellensystems führen. Im Unterschied dazu bleibt bei einer Ausführungsform gemäß der zweiten Lösung durch die Absaugung des Oxidatorgases aus dem Zwischenraum das Temperaturniveau innerhalb der Isolationshülle erhalten, was insgesamt zu einer Verbesserung des Wirkungsgrads des Brennstoffzellensystems führt. Die Bildung eines explosiven Gemischs in der Umgebung des Brennstoffzellensystems kann auch bei dieser Bauweise reduziert beziehungsweise vermieden werden. Eine kritische Konzentration von Brenngas im Einbauraum wird dabei nicht erwartet, da das Brenngas aufgrund von Leckagen durch die Isolationshülle in den Zwischenraum gelangen kann, aus dem es abgesaugt wird. Insbesondere kann vorgesehen sein, die Isolationshülle zumindest für das Brenngas gasdurchlässig auszugestalten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung eines Brennstoffzellensystems,

- Fig. 2: eine Darstellung wie in Fig. 1, jedoch bei einer anderen Bauform.

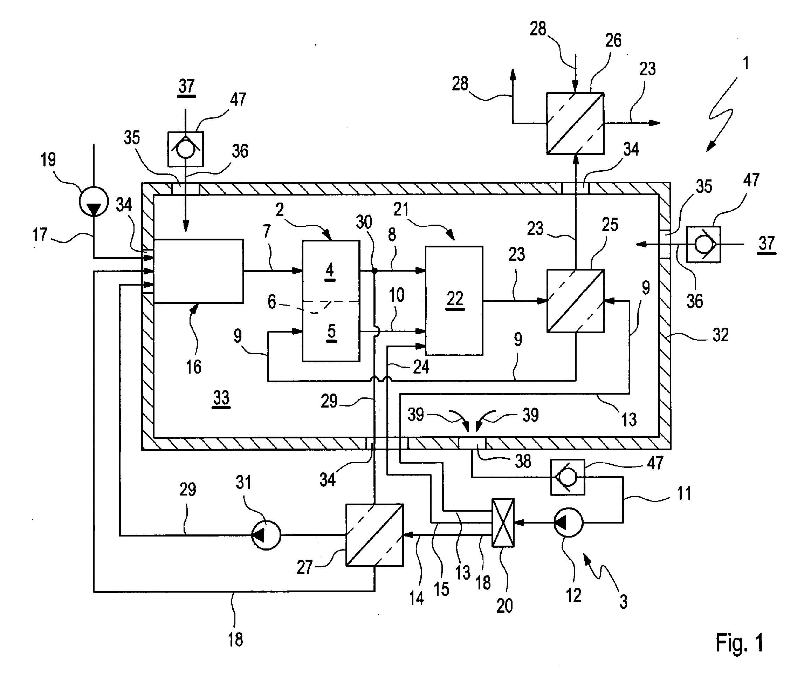

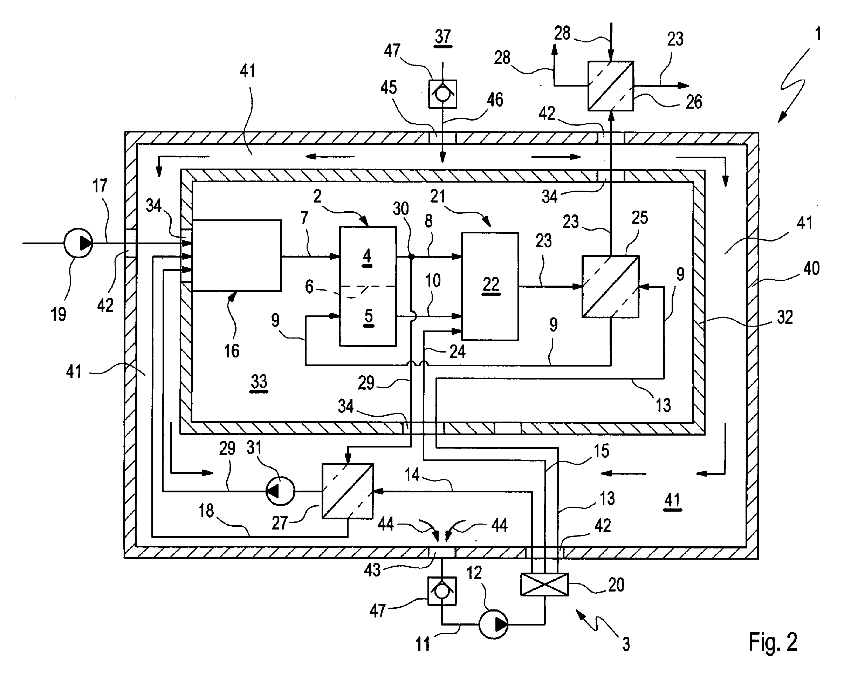

Entsprechend den Fig. 1 und 2 umfasst ein Brennstoffzellensystem 1, das vorzugsweise in einem Kraftfahrzeug angeordnet sein kann, zumindest eine Brennstoffzelle 2 sowie eine Oxidatorversorgungseinrichtung 3. Die Brennstoffzelle 2 dient in üblicher Weise zum Generieren von Strom aus einem Wasserstoffgas enthaltenden Brenngas und einem Sauerstoffgas enthaltenden Oxidatorgas. Das Brenngas wird dabei einer Anodenseite 4 der Brennstoffzelle 2 zugeführt, während das Oxidatorgas, bei dem es sich zweckmäßig um Luft handelt, einer Kathodenseite 5 der Brennstoffzelle 2 zugeführt wird. In der Brennstoffzelle 2 trennt ein Elektrolyt 6 die Anodenseite 4 von der Kathodenseite 5. Üblicherweise besteht die Brennstoffzelle 2 aus einem Stapel mehrerer Brennstoffzellenelemente, in denen jeweils die Anodenseite 4 durch einen Elektrolyten 6 von der Kathodenseite 5 getrennt ist. Vorzugsweise handelt es sich bei der Brennstoffzelle 2 um eine Hochtemperatur-Brennstoffzelle, die insbesondere als Festkörper-Brennstoffzelle beziehungsweise als SOFC-Brennstoffzelle ausgestaltet sein kann. Ebenso ist es grundsätzlich möglich, die Brennstoffzelle 2 als Niedertemperatur-Brennstoffzelle auszugestalten, die insbesondere eine PEM-Brennstoffzelle sein kann, die mit einer Protonen-Transport-Membran beziehungsweise mit einer Polymer-Elektrolyt-Membran als Elektrolyt 6 arbeitet. Die vorliegende Erfindung ist von besonderer Bedeutung für eine Hochtemperatur-Brennstoffzelle. Die Brennstoffzelle 2 erhält eingangsseitig über eine an die Anodenseite 4 angeschlossene Anodengasleitung 7 ein durch das Brenngas gebildetes Anodengas. Ein Wasserstoffgas enthaltendes Anodenabgas verlässt die Brennstoffzelle 2 ausgangsseitig über eine Anodenabgasleitung 8, die ebenfalls an die Anodenseite 4 angeschlossen ist. Des weiteren erhält die Brennstoffzelle 2 eingangsseitig über eine an die Kathodenseite 5 angeschlossene Kathodengasleitung 9 ein durch das Oxidatorgas gebildetes Kathodengas. Ein Kathodenabgas verlässt die Brennstoffzelle 2 ausgangsseitig über eine Kathodenabgasleitung 10, die hierzu an die Kathodenseite 5 angeschlossen ist.

Die Oxidatorversorgungseinrichtung 3 ist zum Zuführen von Oxidatorgas, also insbesondere von Luft, zu wenigstens einer Komponente des Brennstoffzellensystems 1 ausgestaltet. Hierzu weist die Oxidatorversorgungseinrichtung 3 eine Versorgungsleitung 11 auf, in der eine geeignete Fördereinrichtung 12, zum Beispiel eine Pumpe oder ein Gebläse, zum Antreiben des Oxidatorgases angeordnet ist. Die Versorgungsleitung 11 kann an die jeweilige mit Oxidatorgas zu versorgende Komponente des Brennstoffzellensystems 1 direkt oder - wie hier - über einen Versorgungsleitungszweig angeschlossen sein. Bei den gezeigten Beispielen sind drei derartige Versorgungsleitungszweige vorgesehen, nämlich ein erster Versorgungsleitungszweig 13, ein zweiter Versorgungsleitungszweig 14 und ein dritter Versorgungsleitungszweig 15. Der erste Versorgungsleitungszweig 13 bildet die Kathodengasleitung 9 und führt das Oxidatorgas der Brennstoffzelle 2 zu.

Zur gezielten Aufteilung des mit der Fördereinrichtung 12 geförderten Oxidatorgases von der gemeinsamen Versorgungsleitung 11 auf die einzelnen Versorgungsleitungszweige 13, 14, 15 kann eine Ventileinrichtung 20 vorgesehen sein, die über eine entsprechende, hier nicht dargestellte Steuerung gezielt so betätigbar ist, dass die jeweils erforderliche Oxidatorgasmenge durch den jeweiligen Versorgungsleitungszweig 13, 14, 15 förderbar ist.

Vorzugsweise ist das Brennstoffzellensystem 1 außerdem mit einem Reformer 16 ausgestattet, der zum Erzeugen des Brenngases aus einem Kraftstoff und aus einem Oxidatorgas, vorzugsweise Luft, dient. Hierzu ist der Reformer 16 eingangsseitig an eine Kraftstoffleitung 17 und an eine Oxidatorleitung 18 angeschlossen. In der Kraftstoffleitung 17 ist eine Fördereinrichtung 19 zum Antreiben des Kraftstoffs angeordnet, zum Beispiel eine Pumpe. Beim Kraftstoff handelt es sich um einen atomaren Wasserstoff enthaltenden Kraftstoff, vorzugsweise um einen Kohlenwasserstoff. Zweckmäßig kann dabei derjenige Kraftstoff verwendet werden, der in einem mit dem Brennstoffzellensystem 1 ausgestatteten Kraftfahrzeug ohnehin zum Betreiben einer Brennkraftmaschine des Fahrzeugs vorhanden ist, also insbesondere Benzin, Diesel, Biodiesel, Erdgas. Die Oxidatorleitung 18 führt dem Reformer 16 das Oxidatorgas zu und ist in den gezeigten Beispielen durch den zweiten Versorgungsleitungszweig 14 gebildet.

Das Brennstoffzellensystem 1 kann außerdem einen Restgasbrenner 21 aufweisen, der zum Verbrennen von Anodenabgas mit Kathodenabgas ausgestaltet ist. Hierzu ist der Restgasbrenner 21 eingangsseitig an die Anodenabgasleitung 8 und an die Kathodenabgasleitung 10 angeschlossen. Bevorzugt ist der Restgasbrenner 21 mit einem Brennraum 22 ausgestattet, in dem eine Verbrennungsreaktion mit offener Flamme abläuft. Grundsätzlich ist jedoch auch ein Restgasbrenner 21 denkbar, der einen Oxidationskatalysator aufweist und mit katalytischer Verbrennung arbeitet. Ausgangsseitig ist an den Restgasbrenner 21 eine Abgasleitung 23 angeschlossen, über die ein durch die Verbrennungsreaktion gebildetes Brennerabgas vom Restgasbrenner 21 abgeführt wird. Optional kann an den Restgasbrenner 21 eine Kühlgasleitung 24 angeschlossen sein, und zwar insbesondere kathodenseitig. Über die Kühlgasleitung 24 ist bei Bedarf ein Kühlgas, vorzugsweise Luft, dem Restgasbrenner 21 zuführbar. Im gezeigten Beispiel ist die Kühlgasleitung 24 durch den dritten Versorgungsleitungszweig 15 gebildet.

Bei den hier gezeigten bevorzugten Ausführungsformen dient die Oxidatorversorgungseinrichtung 3 zur Versorgung der Brennstoffzelle 2, des Reformers 16 und des Restgasbrenners 21 mit Oxidatorgas. Bei einer anderen Ausführungsform kann die Oxidatorversorgungseinrichtung 3 auch so ausgestaltet sein, dass sie nur eine dieser Komponenten 2, 16, 21 oder nur zwei dieser Komponenten 2, 16, 21 mit dem Oxidatorgas versorgt. Zur Versorgung der jeweils anderen Komponente oder Komponenten 2, 16, 21 kann dann zumindest eine weitere Oxidatorversorgungseinrichtung vorgesehen sein.

Das Brennstoffzellensystem 1 kann desweiteren zumindest einen Wärmeübertrager aufweisen. In den gezeigten Beispielen sind jeweils drei Wärmeübertrager vorgesehen, nämlich ein Hauptwärmeübertrager 25, ein Zusatzwärmeübertrager 26 und ein Rezirkulationswärmeübertrager 27. Der Hauptwärmeübertrager 25 ist einerseits in die Abgasleitung 23 und andererseits in die Kathodengasleitung 9 beziehungsweise in den ersten Versorgungsleitungszweig 13 eingebunden. Der Hauptwärmeübertrager 25 dient zur Übertragung von Wärme vom Brennerabgas auf das Kathodengas. Der Zusatzwärmeübertrager 26 ist einerseits in die Abgasleitung 23 und andererseits in eine Leitung 28 eingebunden, die zu einem grundsätzlich beliebigen Wärmeverbraucher führen kann. Insbesondere kann der Zusatzwärmeübertrager 26 über die Leitung 28 in einen Kühlkreis einer Brennkraftmaschine des mit dem Brennstoffzellensystem 1 ausgestatteten Kraftfahrzeugs oder in einen Heizkreis zum Aufwärmen eines Fahrzeuginnenraums des mit den Brennstoffzellensystem 1 ausgestatteten Fahrzeugs eingebunden sein. Der Zusatzwärmeübertrager 26 ist in der Abgasleitung 23 stromab des Hauptwärmeübertragers 25 angeordnet und kann dem Brennerabgas zusätzliche Wärme entziehen. Der Rezirkulationswärmeübertrager 27 ist einerseits in die Oxidatorgasleitung 18 beziehungsweise in den zweiten Versorgungsleitungszweig 14 und andererseits in eine Rezirkulationsleitung 29 eingebunden. Die Rezirkulationsleitung 29 zweigt bei 30 von der Anodenabgasleitung 8 ab und ist an die Eingangsseite des Reformers 16 angeschlossen. Sie enthält stromab des Rezirkulationswärmeübertragers 27 eine Fördereinrichtung 31 zum Antreiben des rezirkulierten Anodenabgases, bei der es sich beispielsweise um eine Pumpe, ein Gebläse oder einen Kompressor handeln kann. Das Anodenabgas kann je nach Betriebszustand der Brennstoffzelle 2 einen relativ hohen Anteil an Wasserstoffgas enthalten und kann somit durch die Rückführung in den Reformer 16 zur Steigerung des Wirkungsgrads genutzt werden.

Brennstoffzelle 2, Restgasbrenner 21, Hauptwärmeübertrager 25, Zusatzwärmeübertrager 26 und Rezirkulationswärmeübertrager 27 bilden in den gezeigten Beispielen jeweils separate Komponenten. Grundsätzlich ist es jedoch möglich, zumindest zwei dieser Komponenten baulich zu einer Einheit zu integrieren. Beispielsweise kann der Restgasbrenner 21 in eine Ausgangsseite der Brennstoffzelle 2 integriert werden. Zusätzlich oder alternativ kann der Hauptwärmeübertrager 25 in die Ausgangsseite des Restgasbrenners 21 integriert werden. Ebenso ist es möglich, zwei oder drei Wärmeübertrager 25, 26, 27 zu einer baulichen Einheit zu integrieren.

Das Brennstoffzellensystem 1 ist außerdem mit einer thermisch isolierenden Isolationshülle 32 ausgestattet, die vorzugsweise aus einem thermisch isolierenden Material besteht. Durch das Innere der Isolationshülle 32 ist ein Einbauraum 33 gebildet. Das heißt, die Isolationshülle 33 umschließt beziehungsweise umhüllt einen Einbauraum 33. Im Einbauraum 33, also im Inneren der Isolationshülle 32 ist zumindest die Brennstoffzelle 2 angeordnet. Des weiteren kann zumindest eine der Komponenten Reformer 16, Restgasbrenner 21, Hauptwärmeübertrager 25, Rezirkulationswärmeübertrager 27, Fördereinrichtung 31 ebenfalls im Einbauraum 33, also im Inneren der Isolationshülle 32 angeordnet sein. Ohne Beschränkung der Allgemeinheit sind in den gezeigten Beispielen der Reformer 16, die Brennstoffzelle 2, der Restgasbrenner 21 und der Hauptwärmeübertrager 25 innerhalb der Isolationshülle 32, also im Einbauraum 33 angeordnet. Denkbar ist auch eine Ausführungsform, bei der die Isolationshülle 32 aus mehreren Teilhüllen besteht. Beispielsweise kann eine solche Teilhülle zumindest den Reformer 16 umschließen, während eine andere Teilhülle zumindest die Brennstoffzelle 2 und den Restgasbrenner 21 umschließt. Die Isolationshülle 32 enthält mehrere Durchgangsöffnungen 34, durch welche die Kraftstoffleitung 17, die Abgasleitung 23 und die Versorgungsleitungszweige 13, 14, 15 durch die Isolationshülle 32 hindurch geführt sind. Diese Durchführung der genannten Leitungen erfolgt dabei zweckmäßig so, dass die gewünschte thermische Isolierung gewährleistet ist. Insbesondere ist im Bereich der mit den entsprechenden Anschlüssen versehenen Eingangsseite des Reformers 16 die Durchgangsöffnung 34 so gestaltet, dass zumindest die Kraftstoffleitung 17 direkt an den Reformer 16 anschließbar ist, ohne dass sich die Kraftstoffleitung 17 innerhalb des Einbauraums 33 erstreckt. Vorzugsweise bildet ein Abschnitt der Reformereingangsseite einen Teil der Isolationshülle 32.

Bei der in Fig. 1 gezeigten Ausführungsform weist die Isolationshülle 32 außerdem wenigstens eine Einlassöffnung 35 auf, durch die entsprechend Pfeilen 36 Oxidatorgas, also vorzugsweise Luft aus einer Umgebung 37 des Brennstoffzellensystems 1 in das Innere der Isolationshülle 32, also in den Einbauraum 33 gelangt. Die jeweilige Einlassöffnung 35 kann dabei mit einem Rückschlagsperrventil 47 ausgestattet sein, das einen Gasaustritt aus dem Einbauraum 33 in die Umgebung 37 verhindert. Ferner ist die Isolationshülle 32 mit zumindest einer Auslassöffnung 38 ausgestattet, an welche die Versorgungsleitung 11 angeschlossen ist. Dementsprechend kann die Oxidatorversorgungseinrichtung 3 das Oxidatorgas entsprechend Pfeilen 39 durch die Auslassöffnung 38 aus dem Einbauraum 33 ansaugen. Hierdurch wird eine gewisse Spülung des Einbauraums 33 gewährleistet, die verhindert, dass innerhalb des Einbauraumes 33 eine kritische Konzentration an Brenngas entstehen kann, das aufgrund von Leckagen in den Einbauraum 33 gelangen kann. Bevorzugt ist auch der Auslassöffnung 38 ein Rückschlagsperrventil 47 zugeordnet, das zum Einbauraum 33 hin sperrt und z.B. in der Versorgungsleitung 11 angeordnet sein kann.

Entsprechend Fig. 2 kann bei einer anderen Bauform des Brennstoffzellensystems 1 zusätzlich zur Isolationshülle 32 eine Dichthülle 40 vorgesehen sein, welche die Isolationshülle 32 vollständig umschließt beziehungsweise umhüllt. Dabei ist die Dichthülle 40 so dimensioniert, dass sich zwischen der Isolationshülle 32 und der Dichthülle 40 ein Zwischenraum 41 ausbildet. Die Dichthülle 40 kann vorzugsweise gasdicht ausgestaltet sein beziehungsweise aus einem gasdichten Material bestehen. Bei dem in Fig. 2 gezeigten Beispiel weist die Dichthülle 40 mehrere Durchgangsöffnungen 42 auf, durch die die einzelnen Leitungen des Brennstoffzellensystems 1 durch die Dichthülle 40 hindurchgeführt sind. Bei diesen Leitungen handelt es sich hier um die Kraftstoffleitung 17, die Abgasleitung 23 und die Versorgungsleitungszweige 13, 14, 15. Zweckmäßig fluchten die Durchgangsöffnung 42 der Dichthülle 40 zu den Durchgangsöffnungen 34 der Isolationshülle 32. Die Durchführung der einzelnen Leitungen 17, 23, 13, 14, 15 durch die Durchgangsöffnungen 42 erfolgt dabei zweckmäßig gasdicht, um Fehlströmungen beziehungsweise Leckagen zu vermeiden.

Grundsätzlich ist es auch bei einem Brennstoffzellensystem 1, das mit einer derartigen Dichthülle 40 versehen ist, denkbar, das Oxidatorgas wie bei der Ausführungsform gemäß Fig. 1 aus dem Einbauraum 33 anzusaugen. Bevorzugt ist jedoch die in Fig. 2 gezeigte Ausführungsform, bei welcher das Oxidatorgas aus dem Zwischenraum 41 angesaugt wird. Hierzu weist die Dichthülle 40 zumindest eine Auslassöffnung 43 auf, an welche die Versorgungsleitung 11 angeschlossen ist und durch die Oxidatorgas entsprechend Pfeilen 44 aus dem Zwischenraum 41 in die Versorgungsleitung 11 eintritt. Der Auslassöffnung 43 und der Einlassöffnung 45 können wieder Rückschlagsperrventile 47 zugeordnet sein. Die Dichthülle 40 kann außerdem zumindest eine Einlassöffnung 45 aufweisen, durch die das Oxidatorgas entsprechend Pfeilen 46 aus der Umgebung 37 in den Zwischenraum 41 eintritt. Die Einlassöffnung 45 und die Auslassöffnung 43 sind zweckmäßig so angeordnet, dass sich eine möglichst gleichmäßige Umströmung der Isolationshülle 32 und somit eine effektive Spülung des Zwischenraums 41 ausbildet. Diese Umströmung der Isolationshülle 32 beziehungsweise die Durchströmung des Zwischenraums 41 ist hier durch nicht näher bezeichnete Pfeile angedeutet.

Durch diese Bauweise kann im Zwischenraum 41 die Entstehung einer kritischen Konzentration von Brenngas vermieden werden. Zweckmäßig ist bei der in Fig. 2 gezeigten Ausführungsform die Isolationshülle 32 gasdurchlässig ausgestaltet, beziehungsweise aus einem gasdurchlässigen Material hergestellt. Hierdurch kann insbesondere das Brenngas durch die Isolationshülle 32 in den Zwischenraum 41 gelangen. Im Unterschied dazu kann bei der in Fig. 1 gezeigten Ausführungsform die Isolationshülle 32 gasdicht ausgestaltet sein beziehungsweise aus einem gasdichten Werkstoff bestehen.

Die in Fig. 2 gezeigte Ausführungsform hat gegenüber der in Fig. 1 gezeigten Ausführungsform den Vorteil, dass sich die Absaugung des Oxidatorgases aus dem Zwischenraum 41 weniger auf die Temperatur im Einbauraum 33 auswirkt.

Die Fördereinrichtung 12 der Oxidatorversorgungseinrichtung 3 ist vorzugsweise außerhalb der Isolationshülle 32 und insbesondere außerhalb der Dichthülle 40 angeordnet. Ebenso kann die Ventileinrichtung 20 außerhalb der Isolationshülle 32 und/oder außerhalb der Dichthülle 40 angeordnet sein. Ferner ist die Fördereinrichtung 12 bevorzugt explosionsgeschützt ausgestaltet.

Beim gezeigten Beispiel ist der Rezirkulationswärmeübertrager 27 mit der Fördereinrichtung 31 im Zwischenraum 41 angeordnet.

## Patentansprüche

1. Brennstoffzellensystem, insbesondere in einem Kraftfahrzeug,
- mit wenigstens einer Brennstoffzelle (2) zum Generieren von elektrischem Strom aus Brenngas und Oxidatorgas,
- mit einer Oxidatorversorgungseinrichtung (3) zum Zuführen von Oxidatorgas zu wenigstens einer Komponente (2, 16, 21) des Brennstoffzellensystems (1),
- wobei die Brennstoffzelle (2) in einem Einbauraum (33) angeordnet ist, aus dem die Oxidatorversorgungseinrichtung (3) das Oxidatorgas ansaugt,
- wobei der Einbauraum (33) durch das Innere einer thermisch isolierenden Isolationshülle (32) gebildet ist,
- wobei ein Reformer (16) zum Generieren des Brenngases aus Kraftstoff und Oxidatorgas im Einbaurau (33) angeordnet ist,
**dadurch gekennzeichnet,**
**dass** ein Rezirkulationswärmeüberträger (27) zur Wärmeübertragung zwischen dem Reformer (16) rückgeführtem Anodenabgas und einem dem Reformer (16) zugeführten Oxidatorstrom vorgesehen ist.

2. Brennstoffzellensystem, insbesondere in einem Kraftfahrzeug,
- mit wenigstens einer Brennstoffzelle (2) zum Generieren von elektrischem Strom aus Brenngas und Oxidatorgas,
- mit einer Oxidatorversorgungseinrichtung (3) zum Zuführen von Oxidatorgas zu wenigstens einer Komponente (2, 16, 21) des Brennstoffzellensystems (1),
- wobei die Brennstoffzelle (2) in einem Einbauraum (33) angeordnet ist,
- wobei der Einbauraum (33) durch das Innere einer thermisch isolierenden Isolationshülle (32) gebildet ist,
- wobei zwischen der Isolationshülle (32) und einer die Isolationshülle (32) umschließenden Dichthülle (40) ein Zwischenraum (41) ausgebildet ist,
- wobei die oxidatorversorgungseinrichtung (3) das Oxidatorgas aus dem Zwischenraum (41) ansaugt,
- wobei ein Reformer (16) zum Generieren des Brenngases aus Kraftstoff und Oxidatorgas im Einbaurau (33) angeordnet ist,
**dadurch gekennzeichnet,**
**dass** ein Rezirkulationswärmeüberträger (27) zur Wärmeübertragung zwischen dem Reformer (16) rückgeführtem Anodenabgas und einem dem Reformer (16) zugeführten Oxidatorstrom vorgesehen ist.

3. Brennstoffzellensystem nach Anspruch 2,
**dadurch gekennzeichnet,**
**dass** der Rezirkulationswärmeüberträger (27) im Zwischenraum (41) angeordnet ist.

4. Brennstoffzellensystem nach einem der Ansprüche 1 bis 3,
**dadurch gekennzeichnet,**
**dass** ein Restgasbrenner (21) zum Verbrennen von Anodenabgas der Brennstoffzelle (2) mit Kathodenabgas der Brennstoffzelle (2) vorgesehen ist.

5. Brennstoffzellensystem nach einem der Ansprüche 1 bis 4,
**dadurch gekennzeichnet,**
**dass** die Oxidatorversorgungseinrichtung (3) zum Zuführen von Oxidatorgas zur Brennstoffzelle (2) und/oder zum Reformer (16) und/oder zum Restgasbrenner (21) ausgestaltet ist.

6. Brennstoffzellensystem zumindest nach Anspruch 4,
**dadurch gekennzeichnet,**
**dass** ein Wärmeübertrager (25) vorgesehen ist, der einerseits in einer Brennerabgas vom Restgasbrenner (21) abführende Abgasleitung (23) und andererseits in eine Oxidatorgas zu wenigstens einer der Komponenten (2, 16, 21) des Brennstoffzellensystems (1) zuführende Leitung (13, 14, 15) der Oxidatorversorgungseinrichtung (3) eingebunden ist.

7. Brennstoffzellensystem nach Anspruch 4 oder 6,
**dadurch gekennzeichnet,**
- **dass** der Restgasbrenner (21) im Einbauraum (33) angeordnet ist, und/oder
- **dass** der Wärmeübertrager (25) im Einbauraum (33) angeordnet ist.

8. Brennstoffzellensystem zumindest nach Anspruch 2,
**dadurch gekennzeichnet,**
**dass** die Dichthülle (40) gasdicht ausgestattet ist.

9. Brennstoffzellensystem nach einem der Ansprüche 1 bis 7,
**dadurch gekennzeichnet,**
**dass** die Isolationshülle (32) gasdurchlässig ausgestaltet ist.

10. Brennstoffzellensystem nach einem der Ansprüche 1 bis 9,
**dadurch gekennzeichnet,**
**dass** die Oxidatarversorgungseinrichtung (3) eine Fördereinrichtung (12) zum Antreiben des Oxidatorgases aufweist, die außerhalb der Isolationshülle (32) oder außerhalb der Dichthülle (40) angeordnet ist.

11. Brennstoffzellensystem nach einem der Ansprüche 1 bis 10,
**dadurch gekennzeichnet,**
**dass** die Oxidatorversorgungseinrichtung (3) eine Ventileinrichtung (20) zum Aufteilen des Oxidatorstroms auf mehrere Verbraucher (2, 16, 21) aufweist.

## Claims

1. A fuel cell system, more preferably in a motor vehicle
- with at least one fuel cell (2) for generating electric current from fuel gas and oxidant gas,
- with an oxidant supply device (3) for feeding oxidant gas to at least one component (2, 16, 21) of the fuel cell system (1),
- wherein the fuel cell (2) is arranged in an installation space (33) from which the oxidant supply device (3) sucks in the oxidant gas,
- wherein the installation space (33) is formed through the interior of a thermally insulating insulating envelope (32),
- wherein a reformer (16) for generating the fuel gas from fuel and oxidant gas is arranged in the installation space (33),
**characterized in that** a recirculation heat transmission device (27) for the heat transmission between the anode waste gas returned to the reformer (16) and an oxidant flow fed to the reformer (16) is provided.

2. The fuel cell system, more preferably in a motor vehicle,
- with at least one fuel cell (2) for generating electric current from fuel gas and oxidant gas,
- with an oxidant supply device (3) for feeding oxidant gas to at least one component (2, 16, 21) of the fuel cell system (1),
- wherein the fuel cell (2) is arranged in an installation space (33),
- wherein the installation space (33) is formed through the interior of a thermally insulating insulating envelope (32),
- wherein between the insulating envelope (32) and a sealing envelope (40) enclosing the insulating envelope (32) an intermediate space (41) is formed,
- wherein the oxidant supply device (3) sucks in the oxidant gas from the intermediate space (41),
- wherein a reformer (16) for generating the fuel gas from fuel and oxidant gas is arranged in the installation space (33),
**characterized in that** a recirculation heat transmission device (27) for the heat transmission is provided between the anode waste gas returned to the reformer (16) and an oxidant flow fed to the reformer (16).

3. The fuel cell system according to Claim 2, **characterized in that** the recirculation heat transmission device (27) is arranged in the intermediate space (41).

4. The fuel cell system according to any one of the Claims 1 to 3, **characterized in that** a residual gas burner (21) for combusting anode waste gas of the fuel cell (2) with cathode waste gas of the fuel cell (2) is provided.

5. The fuel cell system according to any one of the Claims 1 to 4, **characterized in that** the oxidant supply device (3) is configured for feeding oxidant gas to the fuel cell (2) and/or to the reformer (16) and/or to the residual gas burner (21).

6. The fuel cell system according to at least Claim 4, **characterized in that** a heat transmission device (25) is provided which on the one hand is incorporated in an exhaust gas line (23) discharging burner waste gas from the residual gas burner (21) and on the other hand in a line (13, 14, 15) of the oxidant supply device (3) feeding oxidant gas to at least one of the components (2, 16, 21) of the fuel cell system (1).

7. The fuel cell system according to Claim 4 or 6, **characterized**
- **in that** the residual gas burner (21) is arranged in the installation space (33), and/or
- **in that** the heat transmission device (25) is arranged in the installation space (33).

8. The fuel cell system according to at least Claim 2, **characterized in that** the sealing envelope (40) is equipped gas-tight.

9. The fuel cell system according to any one of the Claims 1 to 7, **characterized in that** the insulating envelope (32) is equipped permeable to gas.

10. The fuel cell system according to any one of the Claims 1 to 9, **characterized in that** the oxidant supply device (3) comprises a feeding device (12) for driving the oxidant gas which is arranged outside the insulating envelope (32) or outside the sealing envelope (40).

11. The fuel cell system according to any one of the Claims 1 to 10, **characterized in that** the oxidant supply device (3) comprises a valve device (20) for dividing the oxidant flow over several of consumers (2, 16, 21).

## Revendications

1. Système de cellules de combustible, en particulier sur un véhicule automobile, comprenant,
- au moins une cellule de combustible (2) pour générer du courant électrique à partir de gaz combustible et de gaz oxydant,
- un dispositif d'alimentation en oxydant (3) pour l'arrivée du gaz oxydant à au moins composant (2, 16, 21) du système de cellules de combustible (1),
- la cellule de combustible (2) étant disposée dans un espace de montage (33), duquel le dispositif d'alimentation en oxydant (3) aspire le gaz oxydant,
- l'espace de montage (33) étant formé par l'intérieur d'une enveloppe d'isolation (32) isolant thermiquement,
- un reformeur (16) étant disposé dans l'espace de montage (33) pour générer le gaz combustible à partir du carburant et du gaz oxydant, **caractérisé en ce que**
un échangeur de chaleur à recirculation (27) est prévu pour la transmission de chaleur entre du gaz brûlé d'anode ramené au reformeur (16) et un flux d'oxydant amené au reformeur (16).

2. Système de cellules de combustible, en particulier sur un véhicule automobile, comprenant
- au moins une cellule de combustible (2) pour générer du courant électrique à partir de gaz combustible et de gaz oxydant,
- un dispositif d'alimentation en oxydant (3) pour l'arrivée de gaz oxydant à au moins un composant (2, 16, 21) du système de cellules de combustible (1),
- la cellule de combustible (2) étant disposée dans un espace de montage (33),
- l'espace de montage (33) étant formé par l'intérieur d'une enveloppe d'isolation (32) isolant thermiquement,
- un espace intermédiaire (41) étant formé entre l'enveloppe d'isolation (32) et une enveloppe étanche (40) entourant l'enveloppe d'isolation (32),
- le dispositif d'alimentation en oxydant (3) aspirant le gaz oxydant de l'espace intermédiaire (41),
- un reformeur (16) étant disposé dans l'espace de montage (33) pour générer le gaz combustible à partir du carburant et du gaz oxydant,
**caractérisé en ce que**
un échangeur de chaleur à recirculation (27) est prévu pour l'échange de chaleur entre le gaz brûlé d'anode ramené au reformeur (16) et un flux d'oxydant amené au reformeur (16).

3. Système de cellules de combustible selon la revendication 2,
**caractérisé en ce que**
l'échangeur de chaleur à recirculation (27) est disposé dans l'espace intermédiaire (41).

4. Système de cellules de combustible selon l'une quelconque des revendications 1 à 3,
**caractérisé en ce que**
un brûleur de gaz résiduel (21) est prévu pour la combustion de gaz brûlé d'anode de la cellule de combustible (2) avec du gaz brûlé de cathode de la cellule de combustible (2).

5. Système de cellules de combustible selon l'une quelconque des revendications 1 à 4,
**caractérisé en ce que**
le dispositif d'alimentation en oxydant (3) est conçu pour l'arrivée de gaz oxydant à la cellule de combustible (2) et/ou au reformeur (16) et/ou au brûleur de gaz résiduel (21).

6. Système de cellules de combustible au moins selon la revendication 4,
**caractérisé en ce que**
il est prévu un échangeur de chaleur (25) qui est intégré d'une part dans une conduite de gaz brûlés (23) évacuant des gaz brûlés de brûleur du brûleur de gaz résiduel (21) et d'autre part dans une conduite (13, 14, 15), amenant du gaz oxydant à au moins l'un des composants (2, 16, 21) du système de cellules de combustible (1), du dispositif d'alimentation en oxydant (3).

7. Système de cellules de combustible selon la revendication 4 ou 6,
**caractérisé en ce que**
- le brûleur de gaz résiduel (21) est disposé dans l'espace de montage (33), et/ou
- **en ce que** l'échangeur de chaleur (25) est disposé dans l'espace de montage (33).

8. Système de cellules de combustible au moins selon la revendication 2,
**caractérisé en ce que**
l'enveloppe étanche (40) est équipée de façon étanche au gaz.

9. Système de cellules de combustible selon l'une quelconque des revendications 1 à 7,
**caractérisé en ce que**
l'enveloppe d'isolation (32) est conçue de façon perméable au gaz.

10. Système de cellules de combustible selon l'une quelconque des revendications 1 à 9,
**caractérisé en ce que**
le dispositif d'alimentation en oxydant (3) présente un dispositif de transport (12) pour l'entraînement du gaz oxydant, qui est disposé à l'extérieur de l'enveloppe d'isolation (32) ou à l'extérieur de l'enveloppe étanche (40).

11. Système de cellules de combustible selon l'une quelconque des revendications 1 à 10,
**caractérisé en ce que**
le dispositif d'alimentation en oxydant (3) présente un dispositif de vanne (20) pour la répartition du flux d'oxydant entre plusieurs consommateurs (2, 16, 21).
